# EUROPÄISCHE PATENTSCHRIFT

(11) **EP 0 503 378 B1**
(45) Veröffentlichungstag und Bekanntmachung des Hinweises auf die Patenterteilung: **20.07.1994**
(21) Anmeldenummer: 92103315.5
(22) Anmeldetag: 27.02.1992
(51) Int. Cl.: F16D 35/00

(54) **Flüssigkeitsreibungskupplung mit regelbarer Spaltweite**
Fluid shear coupling with adjustable gap width
Accouplement à fluide visqueux avec largeur réglable de fente

(30) Priorität: 08.03.1991 AT 498/91
(43) Veröffentlichungstag der Anmeldung: 16.09.1992
(73) Patentinhaber: STEYR-DAIMLER-PUCH AKTIENGESELLSCHAFT, 1010 Wien (AT)
(72) Erfinder: Peier, Othmar, Dipl.-Ing., A-8225 Pöllau (AT)

(56) Entgegenhaltungen:
- DE-C- 3 426 460
- US-A- 2 863 542

## Beschreibung

Die Erfindung bezieht sich auf eine Flüssigkeitsreibungskupplung, die aus einem mit viskoser Flüssigkeit gefüllten Gehäuse, einer in dieses einragenden Innenteil, wechselweise mit der Welle und dem Gehäuse drehfest verbundenen, zwischeneinander greifenden, Innen- und Außenlamellen besteht, wobei die Breite der Konstant gehaltenen Lamellenzwischenräume mittels eines im Gehäuse abgedichtet verschiebbaren Kolbens verstellbar ist.

Derartige regelbare Flüssigkeitsreibungskupplungen werden in allradgetriebenen Kraftfahrzeugen eingesetzt, um das auf die zweite angetriebene Achse übertragene Drehmoment dem jeweiligen Fahrzustand anzupassen. Die Anpassung erfolgt durch Veränderung des Abstandes zwischen den Lamellen und/oder Veränderung des Füllgrades.

Regelbare Flüssigkeitsreibungskupplungen unterscheiden sich von nicht regelbaren vor allem dadurch, daß bei diesen kein scharfer Anstieg des übertragenen Momentes durch Erwärmung und Druckerhöhung in der Kupplung (der sogenannte "Hump") auftritt. Bei bekannten gattungsgemäßen regelbaren Flüssigkeitsreibungskupplungen sind jeweils zwischen den einzelnen Lamellen eines Paketes federnde Distanzelemente angeordnet, um auch bei der zur Verstellung der Spaltweite erforderlichen axialen Verschiebung der einzelnen Lamellen gleichmäßige Lamellenabstände zu gewährleisten und die reibende Berührung einzelner Lamellen zu vermeiden. Bei der aus der AT-PS 384 086 bekannten Flüssigkeitsreibungskupplung sind es beispielsweise Tellerfedern.

Derartige Distanzelemente weisen eine erhebliche axiale Bauhöhe auf und reduzieren damit bei vorgegebem Gehäusedurchmesser den Überlappungsbereich der Innen- und Außenlamellen und damit deren wirksame Fläche und das übertragbare Moment. Die federnden Distanzelemente haben den großen Nachteil, daß sie bei Verringerung der Spaltweite dem Verstellkolben entgegenwirken und somit die Verstellkraft erhöhen. Weiters ist zur Übertragung der Kolbenbewegung auf die Innenlamellen ein Drucklager erforderlich, das Bauraum in Anspruch nimmt und Verschleiß unterliegt. Schließlich ist auch der Raum außerhalb der Tellerfedern im Hinblick auf den Füllgrad der Kupplung als Totraum zu betrachten, durch den sich der Verstellweg unnötig verlängert.

Aus der DE-PS 39 28 975 ist es zwar bekannt, zur Verminderung dieses Totraumes und zur Erleichterung der Montage zwischen den Lamellen eines Paketes Distanzringe vorzusehen, doch handelt es sich dabei um eine nicht regelbare Flüssigkeitsreibungskupplung, die Lamellen eines der beiden Lamellenpakete sind daher nicht axial verschiebbar und die Zwischenringe wirken daher nur als Abstandhalter zwischen diesen festen Lamellen. Eine axiale Bewegung der Lamellen des anderen Lamellenpaketes tritt nur während des "Hump" auf, bei dem sich die axialbeweglichen Lamellen an eine der beiden benachbarten festen Lamellen anlegen. Um das Erreichen des "Hump" zu fördern, sind die Lamellen durchbrochen. Dichtungen zwischen beweglicher Lamelle und Distanzring verbieten sich, weil sie dieses Anlegen der beweglichen Lamelle behindern würden.

Die vorliegende Erfindung stellt sich die Aufgabe, die Einhaltung gleicher Abstände zwischen den Lamellen ohne mechanische Federelemente sicherzustellen und dadurch die Baugröße einer regelbaren Flüssigkeitsreibungskupplung zu vermindern und mit möglichst geringer Verstellkraft und kurzem Verstellweg auszukommen.

Erfindungsgemäß wird das dadurch erreicht, daß die Außenlamellen mit dem Innenteil und die Innenlamellen mit dem Gehäuse ein Überströmen der viskosen Flüssigkeit von einem Lamellenzwischenraum zum nächsten weitgehend unterbindende Dichtspalte bilden.

Bei axialer Verstellung des Kolbens bewirkt der Druckanstieg in der Kammer vor dem Kolben ein Zurückweichen der ersten Lamelle, ohne daß es dazu einer mechanischen Berührung zwischen Kolben und Lamelle bedürfte. Ein Drucklager ist somit nicht erforderlich, wodurch sich auch die axiale Baulänge verringert. Durch die Abdichtung zwischen Lamelle und Gehäuse oder Welle (je nachdem, ob es sich um eine Innenlamelle oder um eine Außenlamelle handelt) kann kein Druckausgleich durch Umströmung der Lamelle stattfinden. Auf diese Weise müssen sich sämtliche Lamellen im Inneren des Gehäuses auf gleiche Abstände einstellen, um den Druckausgleich zwischen den einzelnen Zwischenräumen herzustellen. An die Güte der Abdichtung brauchen wegen der hohen Viskosität der Flüssigkeit keine hohen Anforderungen gestellt zu werden. Dadurch werden mechanische Federelemente entbehrlich und der Durchmesser des Kupplungsgehäuses kann bei gleicher wirksamer Lamellenfläche verringert werden. Dabei verringert sich auch der Totraum, was bei einer regelbaren Flüssigkeitsreibungskupplung den zusätzlichen Vorteil hat, daß für gleiche Änderung des Füllgrades mit einem geringeren Hub des Kolbens das Auslangen gefunden wird.

In einer vorteilhaften Ausführungsform der Erfindung sind zur Abdichtung äußere und innere Drosselstücke vorgesehen, die als in die Außen- bzw. Innenverzahnung passende und mit den ihnen zugeordneten Lamellen einen Radialspalt bildende Ringe ausgebildet und axial verschiebbar sind.

Dadurch wird auf einfache Weise die Umströmung der Lamelle durch die Lücken der Verzahnung verhindert und der radiale Dichtspalt ist in seiner Wirkung unabhängig von der genauen axialen Stellung von Drosselstück und Lamelle zueinander. Außerdem findet so im Dichtspalt kein Verschleiß statt.

In weiterer Ausgestaltung der Erfindung ist die axiale Breite der inneren und/oder äußeren Drosselstücke gleich der Dicke der ihnen zugeordneten Lamellen, vermehrt um den zweifachen minimalen Lamellenabstand. Damit wird erreicht, daß auch in extremen Fällen (durch Leckage verminderter Füllgrad oder besonders große Verstellbewegung) zwischen den Lamellen keine mechanische Reibung auftritt und daß nahe minimaler Spaltweite sich auch zwischen Drosselstück und den benachbarten Lamellen ein Dichtspalt ausbildet.

Die äußeren Drosselstücke können zusätzlich als Kolbenanschlag für die minimale Spaltweite verwendet werden, da sie im Gegensatz zu den inneren Drosselstücken keine Relativdrehbewegung zum Kolben ausführen. Dazu ist die Bearbeitungstoleranz der achsnormalen Stirnflächen der Drosselstücke bezüglich der rechnerischen Breite (Dicke der Lamelle plus zweimal die Minimalspaltweite) für die äußeren Drosselstücke positiv, für die inneren negativ zu wählen.

In einer weiteren Verfeinerung sind die Radien der Dichtflächen des Kolbens gleich den mittleren Flächenradien der Verzahnungen. Dadurch wird das Auftreten eines Pumpeffektes durch die Bewegung des Kolbens und Anlaufen der benachbarten Innenlamelle am Kolben und am benachbarten inneren Drosselstück zuverlässig vermieden.

Im folgenden wird eine bevorzugte Ausführungsform der Erfindung anhand von Figuren beschrieben:
- Fig. 1:: Axialschnitt durch eine erfindungsgemäße regelbare Flüssigkeitsreibungskupplung,
- Fig. 2:: Vergrößerte Darstellung einiger Lamellen aus Figur 1 bei maximaler Spaltweite,
- Fig. 3:: Vergrößerte Darstellung einiger Lamellen aus Figur 1 bei minimaler Spaltweite,
- Fig. 4:: Axialschnitt nach AA in Figur 2,
- Fig. 5:: Querschnitt nach BB in Figur 2.

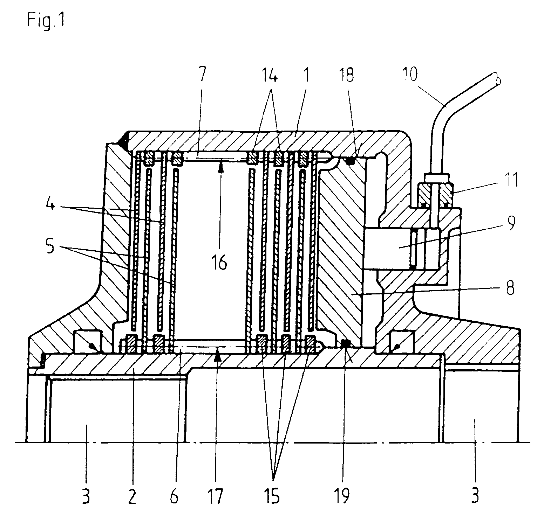

Die in Figur 1 dargestellte erfindungsgemäße Flüssigkeitsreibungskupplung besteht aus einem äußeren flüssigkeitsdichten Gehäuse 1 und einem in diesem frei drehbar angeordneten inneren Teil 2, wobei diese beiden Teile 1,2 Keilwellenverzahnungen 3 oder dergleichen zur drehfesten Verbindung mit der nicht dargestellten An- bzw. Abtriebswelle aufweisen. Als Kupplungsglieder zwischen dem äußeren Kupplungsteil 1 und dem inneren Kupplungsteil 2 dienen Außenlamellen 4 und Innenlamellen 5, die zwei koaxiale ineinandergreifende Sätze bilden. Die Außenlamellen 4 sind mit dem äußeren Kupplungsteil 1 und die Innenlamellen 5 mit dem inneren Kupplungsteil 2 drehfest aber axial verschiebbar verbunden, hier durch Verzahnungen 6,7.

Das Gehäuse 1 ist mit einer viskosen Flüssigkeit gefüllt, wobei der minimiale Füllgrad ca. 50%, und der maximale Füllgrad bis 95 % betragen kann. Der Füllgrad gibt an, welcher Anteil des Gehäusevolumens bei normaler Temperatur mit viskoser Flüssigkeit gefüllt ist. Der Rest ist Luft, die sich durch die Bewegung der Innenlamellen 5 gegenüber den Außenlamellen 4 mit der Flüssigkeit vermischt und die durch ihre Kompressibilität als Feder wirkt. Die Durchmischung von Luft- und viskoser Flüssigkeit ist besonders gut, wenn das Gehäuse 1 nicht rotiert. Durch die Änderung des Füllgrades läßt sich die Form der Kennlinie der Flüssigkeitsreibungskupplung beeinflussen.

Zwischen dem Gehäuse 1 und dem inneren Teil 2 ist ein Kolben 8 abgedichtet gleitend geführt. Der Kolben 8 wird mittels eines oder mehrerer Betätigungskolben 9 verschoben, der von einer Leitung 10, gegebenenfalls über einen Gleitring 11 mit einem hydraulischen Druckmittel steuerbar beaufschlagt ist. Der Kolben 8 bildet mit dem Gehäuse 1 und dem Innenteil 2 zylindrische Dichtflächen 18,19, deren Radius gleich dem Mittelradius 16,17 der Verzahnungen 6,7 ist.

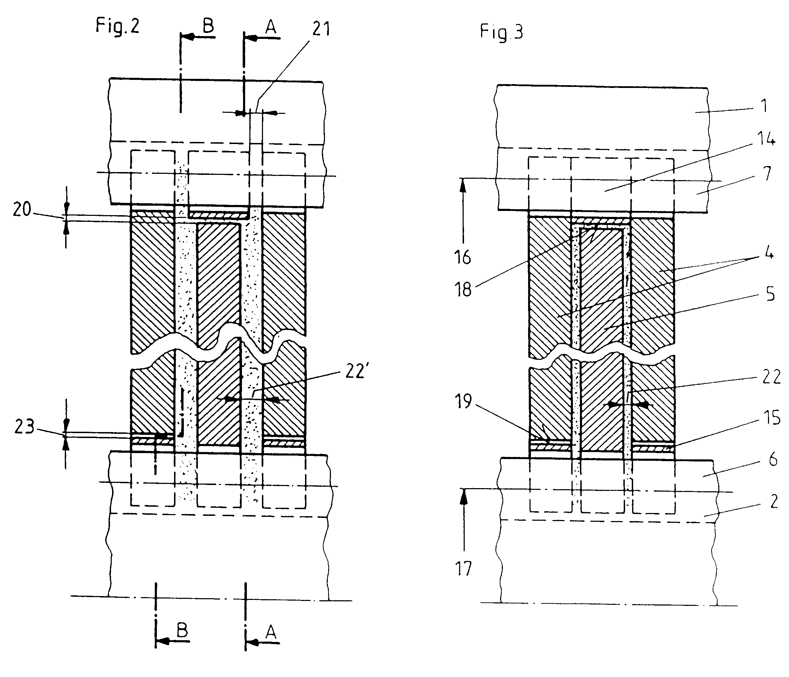

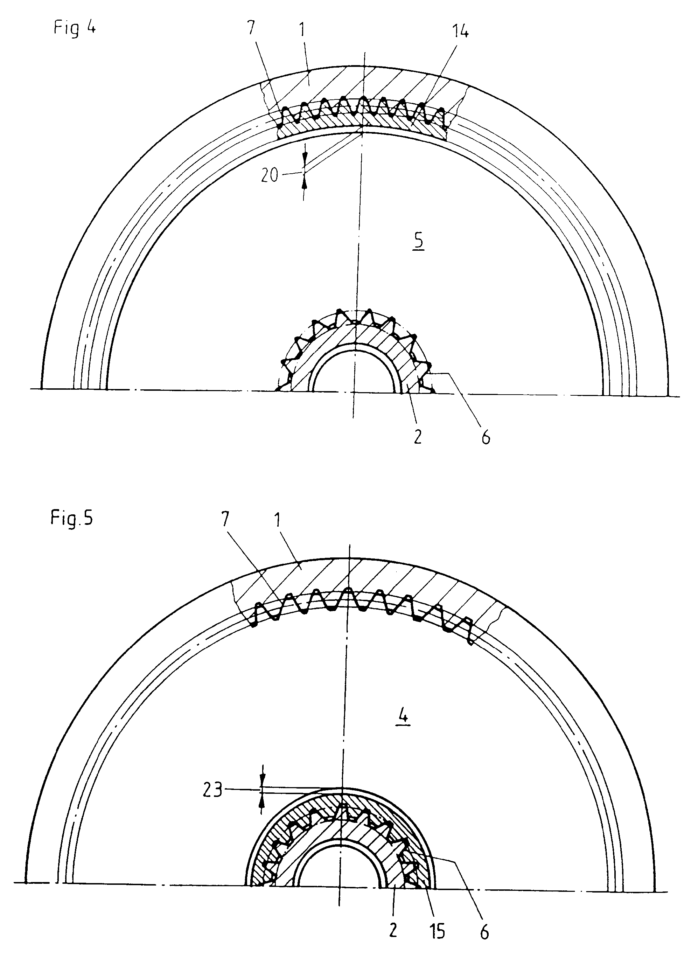

Der aus den Lamellen 4,5 bestehende Lamellensatz ist so zusammengestellt, daß auf beiden Seiten zuerst eine Außenlamelle 4 angeordnet ist. Diese beiden Außenlamellen befinden sich direkt auf dem Gehäuse 1 bzw. am Kolben 8. Durch die drehfeste Verbindung der Außenlamellen 4 mit dem Gehäuse 1 kann auf eine weitere Verdrehsicherung des Kolbens 8 verzichtet werden. Zwischen den Innenrändern der Außenlamellen 4 und dem Innenteil 2 sowie zwischen den Außenrändern der Innenlamellen 5 und dem Gehäuse 1 sind Drosselstücke 14,15 axial verschiebbar eingesetzt, was in den Figuren 2 bis 5 genauer erkennbar ist.

Die Drosselstücke 14 sind Ringe, die an ihrem Außenrand eine Verzahnung 7 aufweisen, die in die Verzahnung des Gehäuses paßt, wodurch diese drehfest, aber axial verschiebbar mit dem Gehäuse verbunden sind. Die Breite der Ringe ist gleich der Dicke der zugehörigen Innenlamelle, vermehrt um die doppelte minimale Spaltbreite 22 zwischen zwei benachbarten Lamellen. Die Breitentoleranz der äußeren Drosselstücke ist positiv, sodaß metallische Reibung zwischen den Lamellen zuverlässig verhindert wird.

Zwischen der zylindrischen Innenfläche der äußeren Drosselstücke 14 und dem Außenrand der Innenlamellen 5 besteht ein Dichtspalt 20, durch den Umströmung der Innenlamelle vermieden wird. Ganz analog bilden auch die inneren Drosselstücke 15 Ringe mit einer inneren Verzahnung 6, die in die des Innenteiles 2 paßt und die gegenüber dem Innenrand der Außenlamelle einen Dichtspalt bilden. Die Breitentoleranz der inneren Drosselstücke ist hier aber negativ, um sicherzustellen, daß der Kolbenanschlag für die minimale Spaltweite über die äußeren Drosselstücke gebildet wird.

Weiters bestehen zwischen den äußeren Drosselstücken 14 und den benachbarten Außenlamellen 4 noch axiale Dichtspalte 21, deren Bedeutung aber gering ist, da eine Umströmung der Drosselstücke durch die Verzahnung 6 vernachlässigbar ist. In der Stellung mit geringster Spaltweite 22, die in Figur 3 dargestellt ist, sind die axialen Dichtspalte 21 aber geschlossen. Das ist die Extremstellung der Flüssigkeitsreibungskupplung mit maximalem übertragenem Moment.

Die Arbeitsweise der erfindungsgemäßen Flüssigkeitsreibungskupplung ist die folgende: Wenn ausgehend von der Stellung größter Spaltweite 22′ der Figur 2, die dem geringsten übertragbaren Moment entspricht, der Kolben 8 druckbeaufschlagt wird, drückt dieser die erste Außenlamelle 4 (Figur 1) nach links. Wegen des dieser ersten Außenlamelle zugeordneten inneren Drosselstückes 15 kann keine Umströmung dieser Außenlamelle stattfinden und daher schiebt der Kolben 8 die Lamelle vor sich her. Dadurch wird die Flüssigkeits-Luft-Mischung in der nächsten Kammer zusammengedrückt, wodurch sich auch die darauffolgende Innenlamelle zum Druckausgleich nach links verschiebt. Wegen der Drosselstücke 14,15 ist ja auch hier ein Druckausgleich durch Umströmung der Lamellen nicht möglich.

Auf diese Weise wird sich überall zwischen den Lamellen derselbe Druck und daher dieselbe Spaltweite 22 einstellen. Die vom Kolben 8 zu überwindende Kraft wird dabei nur durch die Kompressibilität der mit der viskosen Flüssigkeit gemischten Luft erzeugt. Die zusätzliche Kraft von Tellerfedern, wie sie im Stand der Technik vorkommen, ist überflüssig, wodurch eine präzisere und schnellere Regelung des Lamellenabstandes 22 möglich ist. Außerdem füllen die Drosselstücke 14,15 auch die Toträume zwischen den Lamellenrändern und dem Gehäuse 1 bzw. dem Innenteil 2, wodurch auch mit einem geringeren Verstellweg des Kolbens das Auslangen gefunden wird.

Da es sich um eine regelbare Flüssigkeitsreibungskupplung ohne "Hump" handelt, kann die Regelung nur bis zu einer minimalen Spaltweite 22 (siehe Figur 3) erfolgen, was durch die Breite der äußeren Drosselstücke 14 sichergestellt ist.

## Patentansprüche

1. Flüssigkeitsreibungskupplung, die aus einem mit viskoser Flüssigkeit gefüllten Gehäuse (1), einem in dieses einragenden Innenteil (2), wechselweise mit dem Innenteil (2) und dem Gehäuse (1) drehfest verbundenen zwischeneinandergreifenden Innen- und Außenlamellen (5,4) besteht, wobei die Breite der Konstant gehaltenen Lamellenzwischenräume mittels eines im Gehäuse (1) abgedichtet verschiebbaren Kolbens (8) verstellbar ist, **dadurch** **gekennzeichnet,** daß die Außenlamellen (4) mit dem Innenteil (2) und die Innenlamellen (5) mit dem Gehäuse (1) ein Überströmen der viskosen Flüssigkeit von einem Lamellenzwischenraum in den nächsten weitgehend unterbindende Dichtspalte (20,23) bilden.

2. Flüssigkeitsreibungskupplung nach Anspruch 1, **dadurch** **gekennzeichnet,** daß zur Abdichtung äußere und innere Drosselstücke (14,15) vorgesehen sind, die als in die Außen- bzw. Innenverzahnung (7,6) passende und mit den ihnen zugeordneten Lamellen (4,5) einen Radialspalt (20) bildende Ringe ausgebildet und axial verschiebbar sind.

3. Flüssigkeitsreibungskupplung nach Anspruch 2, **dadurch** **gekennzeichnet,** daß die axiale Breite der inneren und/oder äußeren Drosselstücke (15,14) gleich der Dicke der ihnen zugeordneten Lamellen (4,5), vermehrt um den zweifachen minimalen Lamellenabstand (22) ist.

4. Flüssigkeitsreibungskupplung nach Anspruch 3, **dadurch** **gekennzeichnet,** daß die achsnormalen Stirnflächen der äußeren Drosselstücke (14) mit positiver und die der inneren Drosselstücke (15) mit negativer Toleranz bearbeitet sind.

5. Flüssigkeitsreibungskupplung nach Anspruch 1, **dadurch** **gekennzeichnet,** daß die Radien der Dichtflächen (18,19) des Kolbens (8) gleich den mittleren Flächenradien (16,17) der Innen- und der Außenverzahnung sind.

## Claims

1. Fluid friction coupling comprising a housing (1) containing a viscuous fluid, an inner part (2) extending into the latter, interengaging inner and outer disks (5,4) alternatingly coupled to the housing (1) and to the inner part (2), the width of the interstices between the disks, which is kept equal, being adjustable by means of a piston (8) sealingly shiftable in the housing (1), **caracterized** in that the outer disks (4) form with the inner part (2) and the inner disks (5) form with the housing (1) sealing gaps (20,23) largely forestalling the diversion of fluid from one interstice into the next.

2. Fluid friction coupling according to claim 1, **caracterized** in that for sealing purposes inner and outer throttling pieces (14.15) are provided, which are axially shiftable annuli fitting into the outer or respectively inner gearing (7,6) and forming a radial gap (20) with the corresponding disks (4,5).

3. Fluid friction coupling according to claim 2, **caracterized** in that the axial width of the inner and/or outer throttling pieces (15,14) equal the thickness of the corresponding disks (4,5) plus the double minimum interstice (22).

4. Fluid friction coupling according to claim 3, **caracterized** in that the faces normal to the axis of the outer throttling pieces (14) are machined with a positive tolerance and those of the inner throttling pieces (15) with a negative tolerance.

5. Fluid friction coupling according to claim 1, **caracterized** in that the radii of the sealing surfaces (18,19) of the piston (8) equal the mean surface radii (16,17) of the inner and outer gearing.

## Revendications

1. Accouplement à fluide visqueux, se composant d'un carter (1) rempli d'un fluide visqueux, d'une partie intérieure (2) pénétrant dans celui-ci, de disques (5,4) intérieurs et extérieurs solidaires en rotation alternativement avec la partie intérieure (2) et avec le carter (1) et s'engageant mutuellement les uns dans les autres, les espaces inter-disques, maintenus constants, étant réglables au moyen d'un piston (8) qui est déplaçable dans le carter (1) de façon étanche, caractérisé en ce que les disques extérieurs (4) forment avec la partie intérieure (2), et les disques intérieurs (5) forment avec le carter (1), des fentes d'étanchéité respectives (20,23) interdisant le passage du fluide visqueux d'un espace inter-disques dans l'espace voisin.

2. Accouplement à fluide visqueux selon la revendication 1, caractérisé en ce que des pièces d'étranglement extérieures et intérieures (14,15) sont prévues pour l'étanchéité, ces pièces étant réalisées sous forme d'anneaux épousant la forme de la denture de pignon (7,6) extérieure et intérieure prévue sur les disques respectifs, pour former une fente d'étanchéité radiale (20) avec les disques (4,5) correspondants, lesdites pièces étant déplaçables axialement.

3. Accouplement à fluide visqueux selon la revendication 2, caractérisé en ce que la largeur axiale des pièces d'étranglement extérieures et intérieures (14,15) est égale à l'épaisseur des disques (4,5) correspondants, augmenté du double de la distance minimale (22) entre les disques.

4. Accouplement à fluide visqueux selon la revendication 3, caractérisé en ce que la face frontale, normale à l'axe, des pièces d'étranglement extérieures (14) est usinée avec une tolérance positive, et celle des pièces d'étranglement intérieures (15) est usinée avec une tolérance négative.

5. Accouplement à fluide visqueux selon la revendication 1, caractérisé en ce que les rayons des surfaces d'étanchéité (18,19) du piston (8) sont égaux aux rayons moyens de surface (16,17) des dentures de pignon intérieures et extérieures.
